# EUROPEAN PATENT SPECIFICATION

(11) **EP 3 028 070 B1**
(45) Date of publication and mention of the grant of the patent: **03.11.2021**
(21) Application number: 14745147.0
(22) Date of filing: 01.08.2014
(51) Int. Cl.: G01S 19/42, G01S 19/20

(54) **NAVIGATION AND INTEGRITY MONITORING**
NAVIGATION UND INTEGRITÄTSÜBERWACHUNG
SURVEILLANCE DE NAVIGATION ET D'INTÉGRITÉ

(30) Priority: 01.08.2013 GB 201313882
(43) Date of publication of application: 08.06.2016
(73) Proprietor: Qinetiq Limited, Farnborough, Hampshire GU14 0LX (GB)
(72) Inventor: DAVIES, Nigel Clement, Malvern Worcestershire WR14 3PS (GB); EVANS, Thomas Andrew, Malvern Worcestershire WR14 3PS (GB); BOWDEN, Richard Edward, Malvern Worcestershire WR14 3PS (GB)
(74) Representative: QINETIQ IP
(86) International application number: PCT/EP2014/066574
(87) International publication number: WO 2015/014976

(56) References cited:
- DE-A1-102011 075 434
- US-A1- 2011 227 787
- US-A1- 2013 176 168
- WALTER AND P ENGE T: "Weighted RAIM for Precision Approach", PROCEEDINGS OF THE INSTITUTE OF NAVIGATION (ION) GPS, XX, XX, 1 September 1995 (1995-09-01), pages 1995-2004, XP002351332,
- None

## Description

### FIELD OF THE INVENTION

The present invention relates to apparatus, methods, signals, and programs for a computer for integrity, and in particular but not exclusively for Receiver Autonomous Integrity Monitoring (RAIM) in satellite navigation systems, and to systems incorporating the same.

### BACKGROUND TO THE INVENTION

Global Navigation Satellite Systems (GNSS) such as the Global Positioning System (GPS), Galileo, GLONASS, COMPASS and the like use a constellation of satellites to provide positions of receivers. Preferably, GNSS services provide high availability, accurate, robust Positioning, Navigation and Timing (PNT).

GNSS services usually provide a commercial 'open' service readily available for commercial navigation devices and a secured system intended for use by specialised users, in particular by government users and military forces. In GPS, this secured system is known as PPS (Precise Positioning Service) and in Galileo, it is known as PRS (Public Regulated Service). The signals provided by these services are encrypted and are harder to disrupt, block and imitate (or "spoof").

Conventional high performance GNSS receivers often include a function called Receiver Autonomous Integrity Monitoring (RAIM) to determine the integrity that can be placed in the navigation solution for a given temporal period (e.g. for the landing phase of an aircraft). Whilst RAIM is applicable to many different applications, its use in safety critical and airborne safety critical applications is particularly pertinent.

As will be familiar to the skilled person, RAIM refers to a number of known techniques. One such technique comprises consistency checking, in which all position solutions obtained with subsets of detected satellite signals are compared with one another. In practical embodiments, if this check indicates that the positions are not consistent, a receiver may be arranged to provide an alert to a user.

In a further example, RAIM techniques can alternatively or additionally provide fault detection and exclusion (FDE). In order to find the position of a receiver, the receiver first calculates a 'pseudo range' for each signal received which appears to have originated from a satellite. The pseudo range is calculated based on time of flight of the signal (i.e. the difference between the time the signal was sent, which is apparent from the signal content, and the time it is received according to the receiver's clock). The results from each signal are compared and range measurements that form outliers from the set of pseudo ranges can be excluded. Such techniques can detect a possibly faulty (or fraudulent) satellite or signal, and further act to exclude it from consideration, allowing the navigation service to continue. Therefore RAIM gives increased confidence that the final navigation result is correct.

Availability can be a limiting factor for RAIM, which requires that more satellites are visible to the receiver than for a basic navigation service. To obtain a 3D position solution, at least four measurements are required, but fault detection requires at least 5 measurements, and fault isolation and exclusion requires at least 6 measurements (and in practice, more measurements are desirable). Therefore, whilst initially envisaged as being used within a single constellation RAIM has been extend to make use of open service multi-constellation signals. US2013/0176168A1 relates to a controlled access satellite navigation receiver. DE102011075434A1 relates to a method, device and system for determining the confidentiality of a received signal.

US2011/0227787A1 relates to an anti-spoofing detection system.

The paper entitled "Weighted RAIM for Precision Approach" by T Walter and P Enge of Stanford University in Proceedings of the Institute of Navigation GPS 1st Sep 1995 (XP002351332) teaches weighting on the basis of satellite elevation.

### SUMMARY

According to an aspect of the present invention there is provided a method according to claim 1. According to another aspect of the present invention there is provided an apparatus according to claim 7.

According to one aspect of the present disclosure, not covered by the present invention, there is provided a method for signal weighting for satellite navigation systems, the method comprising (i) receiving secure and open service signals from at least one satellite navigation system, (ii) for received signals, determining a pseudo-range, and (iii) associating a statistical weighting to each pseudo-range, said weighting comprising a consideration of whether the signal is an open signal or a secure signal.

This is advantageous as it allows both secure and open signals to be used in carrying out integrity modelling (in particular Receiver Autonomous Integrity Monitoring (RAIM) functions), whereas only one of these services has been used by a given system in the past. In particular, where receivers had access to a secure signal, these have been favoured, as these are less easy to imitate and block (and have, in the past, been more accurate).

Owing to this aspect, the use of both secure and open signals advantageously provides more information to inform an integrity decision. Furthermore, being able to apply weightings to the signals based on the category of service is advantageous as it allows the inherent higher integrity of secure signals (which have anti-spoofing and anti-meaconing design features) to be reflected in the RAIM calculations. Preferably therefore, absent other factors, the weighting applied to a secure system is greater than that applied to an open signal.

According to an a second aspect of the present disclosure, not covered by the present invention, there is provided a method or signal weighting for satellite navigation systems, the method comprising (i) receiving signals from at least one satellite navigation system, (ii) for received signals, determining a pseudo-range, and (iii) associating a statistical weighting to each pseudo-range, said weighting comprising a consideration of the relative trustworthiness of a source of the received signals.

This is advantageous as it enables a method to be performed in which the degree of trust that a user has in a particular source to be used in carrying out integrity modelling.

The signals may be open service signals. The method may further comprise assigning a trustworthiness factor to signals emanating from different sources, the trustworthiness factor being a measure of the trustworthiness of the signal emanating from one source relative to the trustworthiness of the signal emanating from one or more different sources. The statistical weighting applied to the signals from a particular source may be proportional to the trustworthiness factor assigned to signals from that source.

The following features are applicable to both the aforementioned first and second aspects of the present disclosure. Other factors may also be used in weighting. Such factors may include the constellation to which the satellite belongs, the weighting being determined according to predetermined rules. For example, one entity may prefer to first use its own satellite system if available, but trust the signals from the satellite constellation of an ally almost as much, whereas signals which derive from an satellite constellation provided by an untrusted entity or nation may be afforded a low, or zero weighting.

A further factor may be signal quality. To that end, the method may comprise a step of screening received signals to determine the signal quality, and the weighting applied may consider the signal quality. In such examples, higher quality signals will tend to increase the weighting applied to the information derived from that signal.

A further factor may be signal interference. To that end, the method may comprise a step of characterising received signals to determine the level of signal interference, and the weighting applied may consider the measured signal-to-noise ratio. In such examples, lower interference levels will tend to increase the weighting applied to the information derived from that signal.

A further factor may result from an authentication check to determine if the signal conforms to the expected norms. To that end, the method may comprise a step of authenticating received signals to determine the confidence with which it can be determined that the signal arrived from an expected source (such as direction of arrival if this can be derived from the receive antenna system), and the weighting applied may consider the confidence level. In such examples, higher confidence levels will tend to increase the weighting applied to the information derived from that signal.

All of these factors enable the method to assist in intelligently reducing the weighted contribution of low trust measurements in an integrity decision.

The method may comprise a method of navigation and the weightings could be used to determine the weight given to a determined pseudo-range measurement in determining a position solution. This is advantageous as it means that the determined position measurement will generally favour trusted (and, possibly, according to the factors applied, better quality) signals.

The method may comprise a method of integrity monitoring, and in particular, Receiver Autonomous Integrity Monitoring (RAIM). The weightings could be used to determine the weight given to a determined pseudo range measurement used in RAIM processes. As the skilled person will be aware, in RAIM, one or more contributions which are not coherent with other measurements may raise an alarm to the user indicating potential errors, spoofing, interference or faults with that navigation data source, or alternatively or additionally, the signal providing such inconsistent measurements can be excluded, in particular from navigation functions.

In such examples, all of the individual signals could be weighted and RAIM carried out on all the signals together, but this need not be the case in all embodiments. For example, a first stage RAIM process could be carried out on the secure signals to determine, with a high degree of confidence, which signals are to be trusted. This determination could then be supplemented with a second RAIM process, which uses the open service signal but applies a lower weighing thereto. This limits the number of signals being considered in a given RAIM calculation, which may have advantages in some embodiments.

In integrity modelling or navigation methods, signals below a threshold weighting could be excluded, or else a predetermined desirable number of signals could be provided, and only the highest weighted signals used. However, as the weighting will inherently favour trusted/good signals, this need not be the case and all signals could be used.

According to a third aspect of the disclosure, not covered by the present invention, there is provided a processing unit arranged to receive secure and open RF signals, and comprising an analogue to digital converter capable of converting the RF signals to digital signals, an acquisition module , arranged to perform acquisition of the signals and a weighting module arranged to apply a statistical weighting to the signals received, said weighting comprising a consideration of whether the signal is an open signal or a secure signal.

Preferably, the processing unit is arranged to carry out the method of the first aspect of the present disclosure.

The processing unit may further comprise at least one of each of the following:
(i) a cryptographic module, arranged to support acquisition of the secure signals received;
(ii) a characterisation or measurement module , arranged to determine the signal strength and quality;
(iii) an authentication module, arranged to validate the source of a signal;
(iv) a RAIM module, arranged to carry out RAIM functions;
(v) a navigation module, arranged to determine Position Navigation and Time data from the signals received.

The processing unit may comprise a GNSS receiver unit.

According to a fourth aspect of the disclosure, not covered by the present invention, there is provided a processing unit arranged to receive open RF signals, and comprising an analogue to digital converter capable of converting the RF signals to digital signals, an acquisition module, arranged to perform acquisition of the signals and a weighting module arranged to apply a statistical weighting to the signals received, said weighting comprising a consideration of the trustworthiness of a source of the received signals relative to one or more different sources.

### BRIEF DESCRIPTION OF THE DRAWINGS

Embodiments of the invention will now be described by way of example only and with reference to the accompanying figures in which:
Figure 1 shows a GNSS system comprising a constellation of satellites and a receiver unit;
Figure 2 schematically shows the components of a receiver unit;
Figure 3 depicts a process according to an embodiment of the invention;
Figure 4 illustrates another process according to an embodiment of the invention;
Figure 5 further illustrates a process of an alternative embodiment according to an aspect of the invention;
Figures 6 is a flowchart showing detailed processing steps according to an embodiment of the invention; and
Figure 7 shows a tiered process according to an embodiment of the invention.

### DETAILED DESCRIPTION OF INVENTION

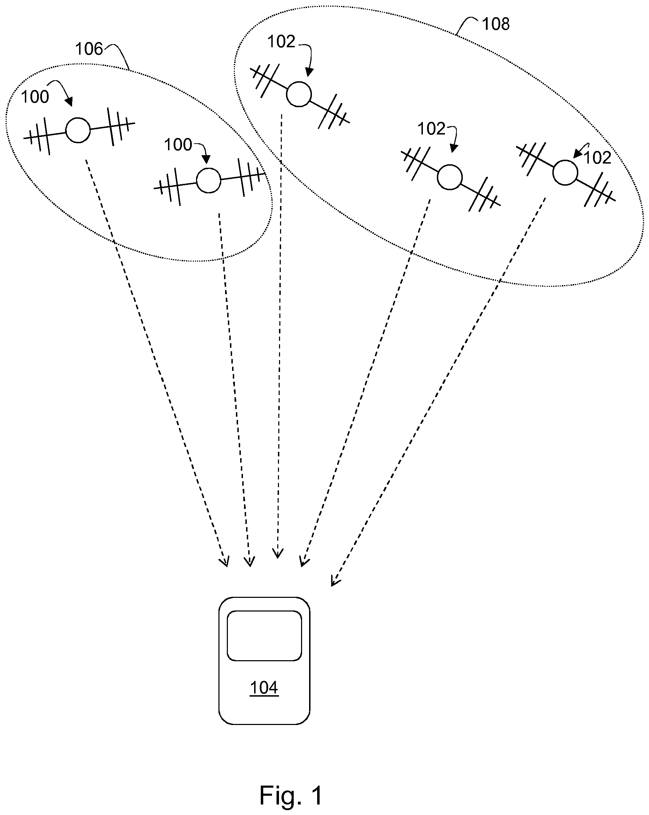

Figure 1 shows a number of satellites 100, 102 which are emitting Radio Frequency (RF) signals which are picked up at a receiver unit 104. The receiver unit 104 could be a handheld device, mounted at a site or could be mounted in a vehicle. In a particular practical embodiment, as the methods described herein provide highly integrity Position, Velocity and Time (PVT) data, the receiver unit 104 could be in an airborne vehicle and be used during safety critical operation such as during take-off and landing.

In this example, the satellites 100, 102 form part of a first 106 and second 108 GNSS constellation, and each satellite is emitting both a secure and open service signal (therefore, in a practical example, the constellations 106, 108 could be GPS and Galileo, and each satellite is transmitting a PPS/PRS signal and an open signal).

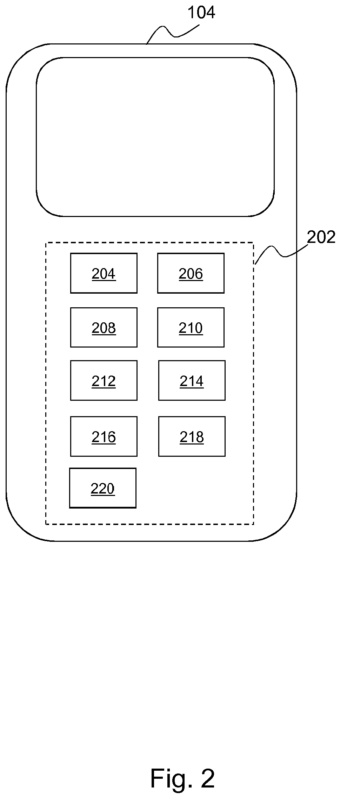

The components of the receiver unit 104 are shown in greater detail in Figure 2. The receiver unit 104 comprises processing circuitry 202, the processing circuitry 202 comprising: an analogue to digital converter 204, which converts the RF signals received from the satellites 100, 102 to digital signals; a screening module 206, which reviews the signal strength and quality, an interference monitor 208, arranged to assess the level of interference in a signal, a crypto module 210, arranged to support acquisition and decrypt secure signals received, an acquisition module 212, arranged to perform 'acquisition' of the satellite signal, an authentication module 214, arranged to validate the source of a signal, a weighting module 216 arranged to apply a weighting to the signals received, a RAIM module 218, arranged to carry out RAIM functions, and a navigation module 220, arranged to determine Position, Navigation and Time information of the receiver from the signals received. The function of these modules will be expanded upon herein below.

Of course the skilled person will be aware that the components described above need not be separate physical components and could be provided by software, hardware, firmware or the like. Indeed, the receiver unit 104 may comprise alternative, additional or fewer components, and the functions outlined above may be split between more than one device. In particular, there may be a device dedicated to receiving the signals from a particular GNSS constellation, and/or there may be a device dedicated to receiving secure signals.

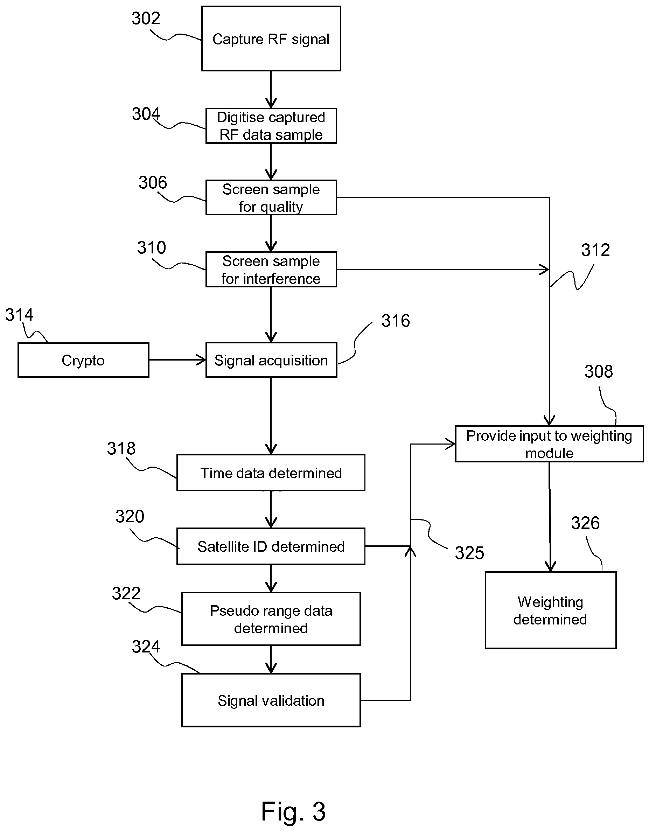

In an embodiment of the invention, the receiver unit 104 carries out a method as described with reference to the flow chart of Figure 3. First, in step 302, the receiver unit 104 receives a number of satellite signals. In step 304, these signals are converted to a digital signal by the analogue to digital converter 204. Next, in step 306, the signals are characterised by the screening module 206, which reviews the signal strength and quality, providing an output via branch 312 to the weighting module 216 (step 308), and the signal is then reviewed, in step 310 by the interference monitor 208, which also provides an output via branch 312 to the weighting module 216 indicative of the level of interference (step 308).

Acquisition (step 316) is performed on the encrypted signal or the open service signal by the acquisition module 212, which, as will be familiar to the skilled person, in the context of GNSS, means the process of comparing a received signal with a locally sourced or generated replica of a satellite signal to find a match, which for secure signals will be supported by the crypto module 210 in step 314.

The aim of acquisition is to discover time data (step 318), but also results, at step 320, in identifying the satellite. At its most basic, acquisition requires correlation between the received signal and candidate signals. Where the correlation exceeds a threshold, a match is declared.

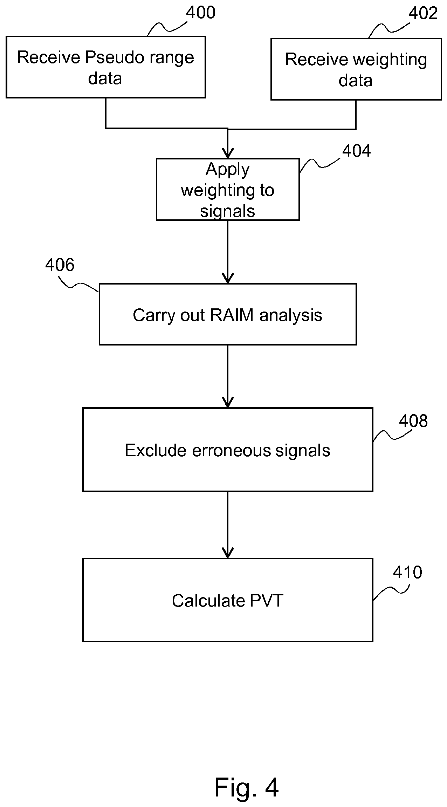

A 'pseudo range' (i.e. the distance from the receiver unit 104 to the purported source) is also determined by the acquisition module (step 322). In this example, the satellite ID is passed via branch 325 to the weighting module 216, and the pseudo-range is passed to the RAIM module 218, where it is utilised as described in relation to Figure 4.

In step 324, the authentication module 212 is then employed to assess signal validation, that is whether the signal conforms to expected norms, for example the direction of arrival relative to the antenna. To achieve this, the authentication module may require further information from an active antenna system than is normally required for simple acquisition. This generates a confidence level, which is passed again to the weighting module 216.

In step 326, the weighting module 216 uses the inputs to apply a weighting to the pseudo range data before the data is utilised by the RAIM module 218. The weighting may take account of the following:
- The constellation to which the satellite belongs, as determined from the satellite ID, the weighting being determined according to predetermined rules.
- The output of the characterisation module, with a signal of higher quality and strength being given a higher weighting.
- The level of interference (higher interference leading to a lower weighting).
- The confidence level generated by the authentication module, with a lower confidence leading to a lower weighting.
- Whether the signal is a secure signal or an open signal, with a higher weighting given to the secure signal.

Of course, not all of these criteria may be used in all embodiments, and further criteria may be used in other embodiments.

With reference to Figure 3, those skilled in the art will appreciate that screening for quality (step 306) and/or interference (step 308) may optionally be carried out after signal acquisition (step 316) rather than before signal acquisition (step 316) as shown in the Figure. In such cases, the data from the screening steps would then be provided to the weighting module 216 at step 308 via branch 325 for example. Those skilled in the art will appreciate also that, depending on the application and hardware resources employed, some steps may be carried out in parallel or at the same time.

The weighting data is then supplied to the RAIM module 218, which operates as set out in Figure 4.

Once the pseudo-range data (step 400) and the weighting data (step 402) have been received for all signals, the RAIM module 218 carries out RAIM processes in step 404 using known techniques, modified to reflect the weightings determined. For example, weighting may be applied prior to the solution of the navigation equation with the measurement residuals then used in an established RAIM algorithm (for example, that described by J.C. Juang in "Failure detection approach applying to GPS autonomous integrity monitoring" (IEE Proceedings on Radar, Sonar and Navigation, Volume 145, Issue 6, pp342-346, Dec 1998).

In an embodiment, weighting is applied according to, for example, weighted least square (or weighted total least square) approaches, which take account of the different confidence levels in the pseudo range measurements.

For example, the high confidence pseudo-range measurements are weighted by a confidence factor to increase their contribution, whilst the low confidence pseudo-range measurements are weighted by another factor to decrease their contributions. Therefore, the least squared measurement residual vector now reflects, in this example, the weighting toward the high confidence GNSS pseudo-range measurements and can be used in established RAIM functions (step 406).

The RAIM module may then act to exclude signals which are inconsistent with the other signals (step 408) before determining the PVT data for the receiver unit 104 using the navigation module 220 (step 410).

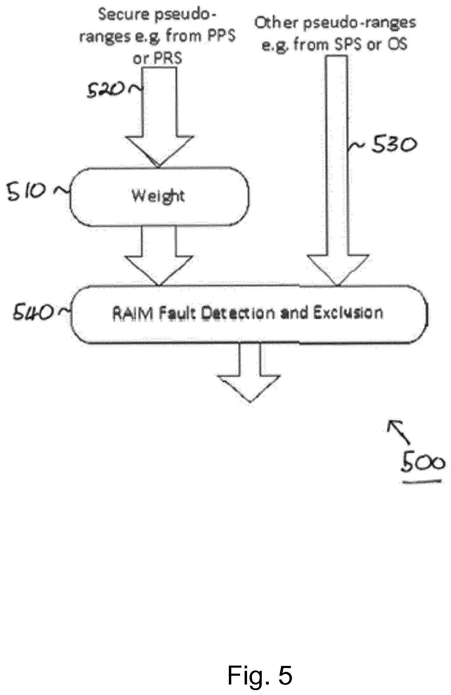

Note that alternatives to this method may be readily envisaged by the skilled person. In particular, and as set out in Figure 5, the method 500 may operate to apply a positive weighting 510 to all pseudo-ranges determined from secure signals 520 (or of course, could conversely apply a negative weighting 530 to all open signals), on the basis that the secure signals 520 are by their nature harder to impersonate or subvert and more likely to be received correctly.

In such examples, a least squared (or total least squared) method for solving the navigation equation using pseudo-range measurements could be used with both the secure and non-secure pseudo-range measurements. The measurement residuals produced thereby could have a weighting factor applied to reduce the residual of the secure pseudo-range measurement. The weighted measurement residual vector can then be used in established RAIM algorithms 540.

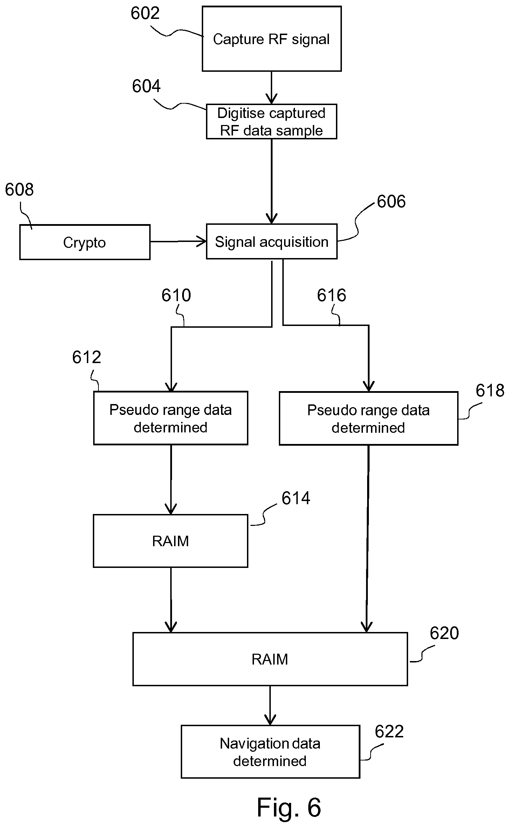

In a second example embodiment, the receiver unit 104 carries out a method as now described in relation to Figure 6.

First, in step 602, the receiver unit 104 receives a number of satellite signals. In step 604, these signals are converted to a digital signal by the analogue to digital converter 204.

In step 606, signal acquisition is carried out with support (step 608) of the crypto module 210 such that, via branch 610, pseudo-range data is determined (step 612) for each secure signal acquired by the acquisition module 212. The secure signal pseudo ranges are passed to the RAIM module 218 (step 614), which carries out, in a first tier, RAIM techniques to provide fault detection and, if enough signals are available, fault exclusion. This produces a result with a high confidence level.

The method proceeds to consideration of the open signals (although the skilled person will of course realise that some of these steps could be carried out at the same time). First acquisition (step 606) is carried out, which allows the determination of pseudo range information (step 618) for each signal by the acquisition module 212 as shown via branch 616. This information is then also supplied to the RAIM module 218, which, in step 620 carries out a second tier RAIM calculation using different confidence levels for integrity monitoring to that placed on the set of secure pseudo-ranges (tier 1) and the other pseudo-ranges (tier 2). This allows greater emphasis to be placed on secure pseudo-ranges in the RAIM function and hence for accurate high confidence navigational data to be determined 622.

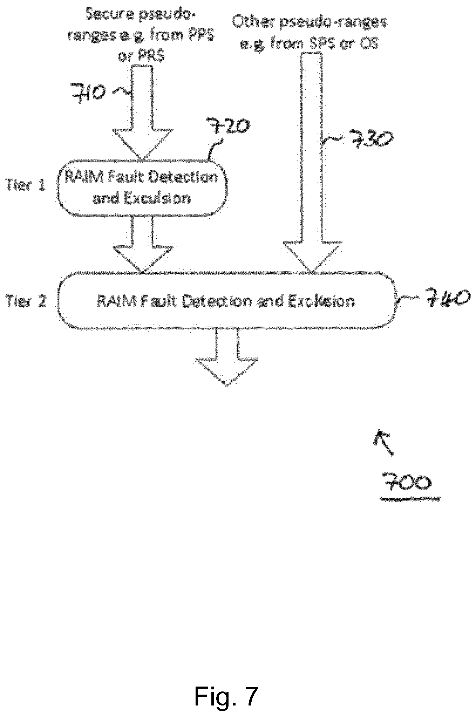

This tier approach is summarised in the diagram of Figure 7, in which secure pseudo-ranges 710, for example from PPS or PRS are fed to a first "tier 1" RAIM platform 720 for fault detection and exclusion, whilst other (less secure or open) pseudo-ranges 730 for example from SPS or OS, are fed directly to a second "tier 2" RAIM platform 740 for fault detection and exclusion as explained above. The second RAIM fault detection platform 740 then combines the results from the first tier 1 RAIM platform 720 with its own and performs fault detection and exclusion with greater emphasis on secure pseudo-ranges in the RAIM function.

Of course, those skilled in the art will appreciate that there could be more than two tiers, with successive iterative fault detection and exclusion to give high confidence in the signals, depending on the application and environment envisaged.

A user may have a greater level of confidence in the accuracy of signals emanating from some sources of open service signals than other sources. In a further example embodiment, these different confidence levels are quantified and used to provide improved PVT calculation results. In particular, individual signal sources are assigned a relative trust factor. This is a measure of the level of trust that a user has in the accuracy or integrity of that source. In this embodiment, the source of the signals is determined and signal indicative of the assigned relative trust factor is sent to the weighting module (216 in Fig 2). The weighting module takes account of this relative trust factor when applying a weighting to the pseudo range data (step 326 of Fig 3).

## Claims

1. A method comprising:
receiving (302) at least one of secure and open service signals from at least one satellite navigation system;
for each of the received signals, determining (322) a pseudo-range; and
associating (326) a statistical weighting to each respective pseudo-range based on which satellite constellation the signal from which the pseudo-range is determined originates from and whether it is an open signal or a secure signal;
using the statistical weightings to determine the weight given to a determined pseudo range measurement used in a Receiver Autonomous Integrity Monitoring, RAIM, step.

2. A method according to claim 1, wherein the statistical weighting is further determined according to at least one predetermined rule comprising screening the received signals to determine a signal to noise ratio to influence the weighting.

3. A method according to claim 1, wherein the statistical weighting is also based on a confidence level generated from an authentication check.

4. A method according to any preceding claim, wherein an acquisition step provides correlation between the received signals and candidate signals, which correlation is then compared to a predetermined threshold to influence the weighting.

5. A method according to any preceding claim, wherein pseudo-ranges below a predetermined threshold weighting are excluded from the RAIM step.

6. A method according to any preceding claim, wherein the RAIM step is split into at least two tiers, with the first tier RAIM step being applied to previously determined secure pseudo-ranges, the output of which is then input to a second tier RAIM step which also receives the previously determined open pseudo-ranges, the second tier RAIM step then processing the inputs for fault detection and/or inclusion.

7. Apparatus comprising:
means adapted for receiving (302) at least one of secure and open service signals from at least one satellite navigation system;
means adapted for, for each of the received signals, determining (322) a pseudo-range;
means adapted for associating (326) a statistical weighting to each respective pseudo-range based on which satellite constellation the signal from which the pseudo-range is determined originates from and whether it is an open signal or a secure signal;
means adapted for using the statistical weightings to determine the weight given to a determined pseudo range measurement used in a RAIM step.

## Patentansprüche

1. Verfahren, umfassend:
Empfangen (302) von zumindest einem von sicheren und offenen Dienstsignalen von zumindest einem Satellitennavigationssystem;
für jedes der empfangenen Signale, Bestimmen (322) eines Pseudobereichs; und
Verbinden (326) einer statistischen Gewichtung mit jedem jeweiligen Pseudobereich basierend darauf, von welcher Satellitenkonstellation das Signal stammt, aus dem der Pseudobereich bestimmt wird, und ob es ein offenes Signal oder ein sicheres Signal ist;
Verwenden der statistischen Gewichtungen, um das Gewicht zu bestimmen, das einer bestimmten Pseudobereichsmessung gegeben wird, die in einem Schritt zur Überwachung der autonomen Empfängerintegrität, RAIM, verwendet wird.

2. Verfahren nach Anspruch 1, wobei die statistische Gewichtung ferner gemäß zumindest einer vorbestimmten Regel bestimmt wird, die das Durchsuchen der empfangenen Signale umfasst, um ein Signal-Rausch-Verhältnis zu bestimmen, um die Gewichtung zu beeinflussen.

3. Verfahren nach Anspruch 1, wobei die statistische Gewichtung auch auf einem Konfidenzniveau basiert, das aus einer Authentifizierungsprüfung erzeugt wird.

4. Verfahren nach einem vorhergehenden Anspruch, wobei ein Erwerbsschritt Korrelation zwischen den empfangenen Signalen und Kandidatensignalen bereitstellt, wobei die Korrelation dann mit einer vorbestimmten Schwelle verglichen wird, um die Gewichtung zu beeinflussen.

5. Verfahren nach einem vorhergehenden Anspruch, wobei Pseudobereiche unter einer vorbestimmten Schwellengewichtung von dem RAIM-Schritt ausgeschlossen sind.

6. Verfahren nach einem vorhergehenden Anspruch, wobei der RAIM-Schritt in zumindest zwei Stufen geteilt ist, wobei der RAIM-Schritt der ersten Stufe auf zuvor bestimmte sichere Pseudobereiche angewandt wird, deren Ausgabe dann in einen RAIM-Schritt der zweiten Stufe eingegeben wird, der auch die zuvor bestimmten offenen Pseudobereiche empfängt, wobei der RAIM-Schritt der zweiten Stufe dann die Eingaben zur Fehlererkennung und/oder -einbindung verarbeitet.

7. Vorrichtung, umfassend:
Mittel, die ausgelegt sind, um zumindest eines von sicheren und offenen Dienstsignalen von zumindest einem Satellitennavigationssystem zu empfangen (302);
Mittel, die ausgelegt sind, um für jedes der empfangenen Signale einen Pseudobereich zu bestimmen (322);
Mittel, die ausgelegt sind, um eine statistische Gewichtung mit jedem jeweiligen Pseudobereich zu verbinden (326), basierend darauf, von welcher Satellitenkonstellation das Signal stammt, aus dem der Pseudobereich bestimmt wird, und ob es ein offenes Signal oder ein sicheres Signal ist;
Mittel, die ausgelegt sind, um die statistischen Gewichtungen zu verwenden, um das Gewicht zu bestimmen, das einer bestimmten Pseudobereichsmessung gegeben wird, die in einem RAIM-Schritt verwendet wird.

## Revendications

1. Procédé comprenant :
la réception (302) d'au moins l'un de signaux de service sécurisés et ouverts en provenance d'au moins un système de navigation par satellite ;
pour chacun des signaux reçus, la détermination (322) d'une pseudo-distance ; et l'association (326) d'une pondération statistique à chaque pseudo-distance respective sur la base de la constellation de satellites dont provient le signal à partir duquel la pseudo-distance est déterminée et si il est un signal ouvert ou un signal sécurisé ;
l'utilisation des pondérations statistiques pour déterminer le poids donné à une mesure de pseudo-distance déterminée utilisée dans une étape de surveillance de l'intégrité autonome du récepteur, RAIM.

2. Procédé selon la revendication 1, ladite pondération statistique étant en outre déterminée selon au moins une règle prédéfinie comprenant le filtrage des signaux reçus pour déterminer un rapport signal sur bruit afin d'influencer la pondération.

3. Procédé selon la revendication 1, ladite pondération statistique étant également basée sur un niveau de confiance généré à partir d'une vérification d'authentification.

4. Procédé selon une quelconque revendication précédente, une étape d'acquisition fournissant une corrélation entre les signaux reçus et les signaux candidats, laquelle corrélation est ensuite comparée à un seuil prédéfini pour influencer la pondération.

5. Procédé selon une quelconque revendication précédente, lesdites pseudo-distances inférieures à une pondération seuil prédéfinie étant exclues de l'étape RAIM.

6. Procédé selon une quelconque revendication précédente, ladite étape RAIM étant divisée en au moins deux niveaux, l'étape RAIM de premier niveau étant appliquée à des pseudo-distances sécurisées précédemment déterminées, dont la sortie est ensuite entrée dans une étape RAIM de second niveau qui reçoit également les pseudo-distances ouvertes précédemment déterminées, l'étape RAIM de second niveau traitant ensuite les entrées en vue de la détection et/ou de l'inclusion de défauts.

7. Appareil comprenant :
des moyens adaptés pour recevoir (302) au moins l'un des signaux de service sécurisés et ouverts en provenance d'au moins un système de navigation par satellite ;
des moyens adaptés pour, pour chacun des signaux reçus, déterminer (322) une pseudo-distance ;
des moyens adaptés pour associer (326) une pondération statistique à chaque pseudo-distance respective sur la base de la constellation de satellites dont provient le signal à partir duquel la pseudo-distance est déterminée et si il est un signal ouvert ou un signal sécurisé ;
des moyens adaptés pour utiliser les pondérations statistiques pour déterminer le poids attribué à une mesure de pseudo-distance déterminée utilisée dans une étape RAIM.
